(19) Europäisches Patentamt

European Patent Office

Office européen des brevets

(11) **EP 1 417 687 B1**

(12) **FASCICULE DE BREVET EUROPEEN**

(45) Date de publication et mention
de la délivrance du brevet:
**17.05.2006 Bulletin 2006/20**

(51) Int Cl.:
***G21C 3/62*** *(2006.01)*

(21) Numéro de dépôt: **02758528.0**

(86) Numéro de dépôt international:
**PCT/FR2002/002285**

(22) Date de dépôt: **01.07.2002**

(87) Numéro de publication internationale:
**WO 2003/005374 (16.01.2003 Gazette 2003/03)**

(54) **PROCEDE DE SULPHURATION D'UNE POUDRE D'UO2 ET PROCEDE DE FABRICATION DE PASTILLES DE COMBUSTIBLE NUCLEAIRE A BASE D'UO2 OU D'OXIDE MIXTE (U,Pu)O2 AVEC ADDITION DE SOUFFRE**

VERFAHREN ZUR SULFORISIERUNG EINES UO2 PULVERS UND VERFAHREN ZUR HERSTELLUNG VON NUKLEARBRENNSTOFF-PELLETS AUF DER BASIS VON UO2 ODER GEMISCHTEM (U.Pu)O2 OXID MIT ZUSÄTZLICHEM SCHWEFEL

METHOD FOR SULPHURIZING A UO2 POWDER AND METHOD FOR MAKING NUCLEAR FUEL PELLETS BASED ON UO2 OR MIXED (U,Pu)O2 OXIDE WITH ADDED SULPHUR

(84) Etats contractants désignés:
**BE DE ES GB SE**

(30) Priorité: **04.07.2001 FR 0108870**

(43) Date de publication de la demande:
**12.05.2004 Bulletin 2004/20**

(73) Titulaires:
• **COMMISSARIAT A L'ENERGIE ATOMIQUE**
**75752 Paris 15ème (FR)**
• **COMPAGNIE GENERALE DES MATIERES NUCLEAIRES**
**78140 Velizy Villacoublay (FR)**

(72) Inventeurs:
• **CARANONI, Laurent**
**F-13480 Cabries (FR)**
• **DUBOIS, Sylvie**
**F-13610 Le Puy Sainte Reparade (FR)**

(74) Mandataire: **Poulin, Gérard**
**Brevatome**
**3, rue du Docteur Lancereaux**
**75008 Paris (FR)**

(56) Documents cités:
**FR-A- 2 050 495        FR-A- 2 424 231**
**FR-A- 2 738 076**

• **DATABASE WPI Section Ch, Week 200057 Derwent Publications Ltd., London, GB; Class K05, AN 2000-595970 XP002199794 & JP 2000 193776 A (NIPPON NUCLEAR FUELS KK), 14 juillet 2000 (2000-07-14)**
• **DATABASE WPI Section Ch, Week 198727 Derwent Publications Ltd., London, GB; Class E31, AN 1987-187426 XP002199795 & JP 62 115398 A (NIPPON NUCLEAR FUELS KK) , 27 mai 1987 (1987-05-27)**

**EP 1 417 687 B1**

**Description**

La présente invention concerne un procédé de sulfuration d'une poudre d'UO$_2$.

La présente invention a, en outre, pour objet un procédé de fabrication de pastilles de combustible nucléaire à base de dioxyde d'uranium ou d'oxydes mixtes d'uranium et de plutonium, de type MOX, à base d'oxyde mixte (U, Pu)O$_2$ utilisables dans tout type de réacteur, notamment dans les réacteurs nucléaires à eau, en particulier dans les réacteurs à eau pressurisée.

De façon plus précise, l'invention concerne un procédé permettant d'obtenir, par adjonction de soufre, des pastilles frittées de combustible nucléaire présentant des propriétés améliorées en ce qui concerne la microstructure de la pastille avec, en particulier, l'augmentation de la taille de grains du matériau, par rapport aux tailles usuelles.

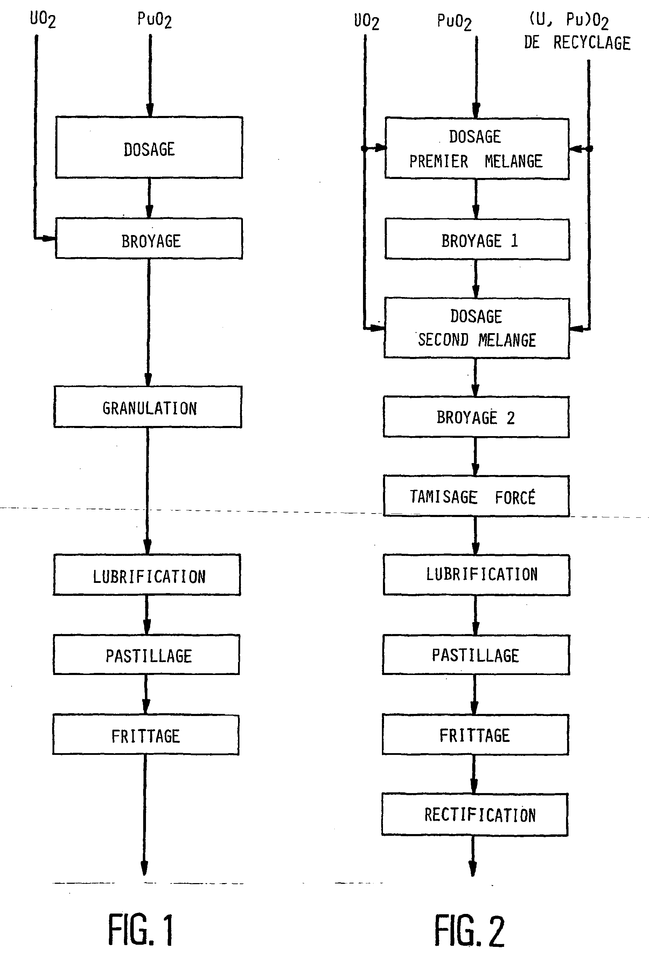

Parmi les procédés utilisés jusqu'à présent pour la fabrication de pastilles combustibles nucléaires à base d'oxyde mixte (U,Pu)O$_2$, on connaît par le document " Techniques de l'Ingénieur - Génie Nucléaire -B3630-1 à 3630-10 ", un procédé dans lequel on part d'un mélange de poudres de UO$_2$ et de PuO$_2$ que l'on soumet à un broyage, un compactage et une granulation suivis d'un pastillage et d'un frittage (figure 1).

Dans ce procédé, ainsi appelé procédé de " cobroyage direct ", qui est représenté de façon schématique sur la figure 1, on part de poudres d'UO$_2$ et de PuO$_2$ que l'on mélange dans les proportions voulues pour obtenir le taux de plutonium désiré, en tenant compte des caractéristiques isotopiques et des rapports métal-oxyde des différents lots de poudres utilisés. Ainsi, dans la première étape de dosage, on mélange les quantités voulues de poudres d'UO$_2$ et de PuO$_2$ pour obtenir le taux de plutonium spécifié. On réalise ensuite la deuxième étape, qui est une étape de broyage dans des jarres cylindriques contenant des boulets en matériau dur pour détruire les agglomérats de poudres, mélanger intimement les constituants et fragmenter les particules de poudres en augmentant ainsi leur aptitude au frittage. On réalise ensuite la troisième étape de granulation qui consiste à compacter les poudres obtenues précédemment, puis à fractionner les compacts obtenus dans un concasseur et à les tamiser pour obtenir la granulométrie désirée et transformer la poudre en un produit plus dense et grossièrement sphérique. Après cette opération, on réalise l'étape de lubrification qui consiste à ajouter un lubrifiant tel que le stéarate de zinc ou de calcium aux granulés. On réalise ensuite le pastillage par pressage à pression constante du granulé dans des presses alternatives ou rotatives, puis on procède au frittage pour densifier les pastilles et obtenir les caractéristiques finales.

Ce procédé présente l'inconvénient majeur de donner des pastilles de combustible nucléaire dont la structure interne ne leur confère pas une aptitude satisfaisante à la rectification en raison de fissuration et de défauts d'aspect.

Par ailleurs, les pastilles frittées ainsi obtenues, bien que répondant aux spécifications exigées posent toujours certains problèmes pour obtenir ensuite la dissolution complète du plutonium lors des opérations de retraitement des pastilles irradiées. En effet, dans un réacteur nucléaire, ces pastilles sont soumises à des températures élevées, ce qui conduit à l'obtention d'oxyde de plutonium réfractaire difficile à dissoudre.

Le brevet FR-A-2 622 343 décrit un procédé appelé " procédé de double cobroyage " qui constitue une évolution du procédé précédent et qui est représenté de façon schématique sur la figure 2, et dans lequel on soumet à un pastillage, puis à un frittage, une charge de poudres de UO$_2$ et de PuO$_2$ constituées de particules ayant des granulométries inférieures ou égales à 250 $\mu$m qui est préparée de la façon suivante : dosage d'un premier mélange de poudres (mélange mère) ayant une teneur en plutonium supérieure à la teneur spécifiée et composé d'UO$_2$, de PuO$_2$ et éventuellement de poudres de recyclage qui subit un premier broyage, puis dosage d'un second mélange de poudre par addition de UO$_2$ et éventuellement de poudres de recyclage. Ce second mélange subit un broyage pendant une durée limitée et un tamisage à travers un tamis ayant des ouvertures de dimensions inférieures ou égales à 250 $\mu$m.

Dans une variante de ce procédé, le second broyage est remplacé par un simple mélange.

Cependant, les pastilles obtenues aussi bien par le procédé de cobroyage direct que par le procédé de double cobroyage qui satisfont aux spécifications exigées ne présentent pas les caractéristiques optimales vis-à-vis du relâchement des gaz de fission, aux forts taux de combustion.

Or, il a été mis en évidence par exemple dans le document FR-A-2 424 231 que la microstructure des pastilles frittées et notamment la taille des grains a un effet majeur sur la vitesse d'échappement des produits de fission en particulier des produits gazeux, lors de l'irradiation des combustibles. En effet, une taille de grains comprise entre 20 et 40 $\mu$m (microns) apparaît favorable à la rétention des gaz de fission tout en conservant au matériau un comportement au fluage satisfaisant.

Il est d'autre part connu par le brevet GB-A-2 019 824, correspondant au brevet FR-A-2 424 231, qu'il est possible de préparer des pastilles de dioxyde d'uranium fritté constitué de gros grains. Dans la première étape du procédé, on fait réagir un nitrate d'uranyle avec une source de soufre sous forme liquide, seul l'acide sulfurique étant cité, à une température élevée pour former un trioxyde d'uranium contenant du soufre. La poudre d'UO$_2$ obtenue par précipitation et traitement thermique du diuranate d'ammonium permet d'élaborer des pastilles de combustible présentant des tailles de grains allant de 50 à 1 000 $\mu$m. Les teneurs en soufre élémentaire dans UO$_2$ peuvent atteindre 300 ppm massique.

Dans ce procédé, l'introduction du soufre est réalisée par voie liquide, en amont de la préparation de la poudre d'UO$_2$. Bien que ce document mette en évidence l'influence d'un composé soufré sur la croissance cristalline, le fait de réaliser l'incorporation du soufre sous forme liquide ne peut convenir à la fabrication de combustible MOX compte-tenu des problèmes de criticité.

De plus, l'introduction du soufre à un stade très amont, celui de la préparation de l'$UO_2$ précurseur, multiplie le nombre d'étapes où le soufre est présent, augmentant ainsi les risques de pollution, corrosion, etc.

Le brevet japonais JP-A-62 115 398 décrit la préparation d'un combustible nucléaire, dans lequel on incorpore du soufre à l'état pulvérulent dans une poudre d'un seul oxyde choisi parmi $UO_2$, $ThO_2$, $PuO_2$ et $Gd_2O_3$.

L'opération est réalisée par brassage de la poudre avec de 0,1 % à 1 % en masse de soufre pur, ou d'un composé organique soufré comme le sulfate d'ammonium, le sulfonate de naphtylamine, ou l'acide xylènesulfonique.

Les comprimés élaborés sont préalablement chauffés jusqu'au point de fusion de l'additif soufré, puis frittés à 1 500-1 800°C pendant 1 à 10 heures dans une atmosphère réductrice de $H_2$. Aucune taille de grains précise n'est donnée dans ce document.

Dans ce document, il est nécessaire de passer par une étape de fusion des additifs soufrés, préalablement à l'opération de frittage.

Le produit organique soufré a semble-t-il pour but d'améliorer la rétention des gaz de fission et l'interaction entre la pastille et la gaine.

La pastille obtenue présente une structure hétérogène avec des grains de faibles diamètres en surface et des gros grains dans le coeur de la pastille.

Le document FR-A-2 738 076 décrit un procédé de fabrication de pastilles de combustible MOX par incorporation dans la poudre initiale d'une cire organique de composition $C_{17}H_{37}NO_3S$, habituellement utilisée pour ses propriétés désagglomérantes. Le mélange contenant généralement 0,6 % massique d'additif est effectué par cobroyage, puis mis en forme et fritté. Les tailles de grains observées sur les pastilles finales sont comprises entre 20 et 40 $\mu$m, c'est-à-dire qu'elles sont plus élevées d'un facteur 2 à 5 que les tailles usuelles. Les auteurs indiquent que la cire, qui a une masse molaire environ 10 fois supérieure à celle du soufre pur, permettrait de mélanger intimement de faibles quantités de soufre.

Il existe un besoin pour un procédé qui permette l'obtention d'un combustible à base d'oxyde mixte ou de dioxyde d'uranium à taille de grain élevée, répondant à l'ensemble des spécifications exigées par ailleurs pour ces pastilles.

Il existe encore un besoin pour un procédé de fabrication de pastilles qui ne présente pas les limitations, défauts et désavantages des procédés de l'art antérieur, dans lesquels on met en oeuvre un additif soufré sous forme liquide ou solide.

La présente invention a notamment pour but de fournir un procédé de sulfuration et un procédé de fabrication de pastilles de combustible nucléaire incluant ce traitement de sulfuration, permettant de répondre, entre autres, aux besoins définis plus haut.

Ce but, et d'autres encore sont atteints selon l'invention par un procédé de sulfuration d'une poudre d'$UO_2$, dans lequel ladite poudre est sulfurée par mise en contact avec un agent de sulfuration gazeux.

Ainsi, de manière fondamentale, la présente invention introduit l'obtention par voie gazeuse des espèces soufrées dans la poudre d'$UO_2$ ou d'$UO_2$ et de $PuO_2$.

L'agent de sulfuration peut être avantageusement choisi parmi le sulfure de carbone $CS_2$ et le sulfure d'hydrogène $H_2S$.

L'agent de sulfuration préféré est le sulfure d'hydrogène $H_2S$ .

Avantageusement, l'agent de sulfuration gazeux est mélangé avec de l'hydrogène et un gaz neutre, tel que l'argon ou l'azote.

Avantageusement, le mélange gazeux comprend généralement en volume de 2,5 à 25 % d'agent de sulfuration, tel que $H_2S$, de 37,5 % à 72,5 % d'hydrogène, et de 60 % à 2,5 % de gaz neutre, tel que l'argon.

Le débit gazeux total, du mélange de gaz utilisé pour la sulfuration est généralement de 1 à 500 ml/mn, il est proche de 200 ml/mn par exemple.

La mise en contact de l'agent de sulfuration gazeux est généralement réalisée à une température de 800°C à 1 200°C et de préférence de 970°C à 980°C pendant une durée de 1 à 11 heures.

Cette plage de températures préférée est choisie pour des raisons cinétiques, mais des températures plus basses conviendraient.

Ce traitement conduit à l'obtention de poudre contenant du soufre dans la structure $UO_2$ ou en adsorption, ainsi que sous forme de phases cristallines, notamment UOS.

Le procédé de sulfuration selon l'invention se différencie fondamentalement des procédés de sulfuration de l'art antérieur, par le fait que l'espèce soufrée - qui, dans le procédé de fabrication des pastilles est favorable au grossissement des grains - est introduite par un procédé en voie gazeuse au cours duquel la poudre de $UO_2$ est mise en contact avec l'agent de sulfuration, tel que $H_2S$, qui se trouve à l'état gazeux.

En d'autres termes, la sulfuration du dioxyde d'uranium a lieu sous courant gazeux, par exemple de sulfure d'hydrogène, et l'agent de sulfuration n'est donc introduit ni sous forme liquide, ni sous forme solide.

Le mode de sulfuration par voie gazeuse avec un agent de sulfuration à l'état gazeux, tel que $H_2S$, n'est ni décrit, ni suggéré dans les documents de l'art antérieur.

Le procédé selon l'invention, dans lequel l'additif soufré ou agent de sulfuration, est mis en oeuvre sous forme gazeuse est d'une grande sûreté et permet d'éviter les risques de criticité liés à l'ajout de l'additif par voie liquide, en particulier, dans la fabrication des mélanges $UO_2$-$PuO_2$. En effet, les produits hydrogénés, tels que l'eau, ont un effet modérateur, c'est-à-dire qu'ils peuvent favoriser une réaction de fission en chaîne non contrôlée (accident de criticité).

Une autre différence réside dans le stade où intervient la sulfuration lors de la préparation de la poudre d'UO$_2$ pour le procédé par voie liquide, ou lors de la fabrication du combustible pour le procédé de cette invention.

Par rapport aux procédés mettant en oeuvre l'additif soufré par voie solide, les avantages de la mise en oeuvre d'un agent à l'état gazeux sont un meilleur contrôle de la teneur moyenne en soufre, en particulier les faibles teneurs, grâce à l'adaptation du cycle thermique (durée, concentration H$_2$S, température) et une meilleure dispersion du soufre dans l'ensemble de la poudre.

La poudre soufrée obtenue présente une teneur en soufre, bien définie, et qui peut être aisément ajustée.

La teneur en soufre de la poudre finale est notamment fonction des conditions thermodynamiques et cinétiques de la sulfuration qui peuvent être facilement réglées pour parvenir à la teneur voulue. Généralement la teneur en soufre de la poudre de UO$_2$ est de 100 ppm à plusieurs %.

L'invention concerne, en outre, un procédé de fabrication de pastilles de combustible nucléaire à base d'oxyde d'uranium, ou d'oxyde mixte d'uranium et de plutonium, à partir d'une charge totalement ou partiellement soufrée de poudre d'UO$_2$ ou de poudre d'UO$_2$ et de PuO$_2$, par lubrification, pastillage et frittage, dans lequel la charge de poudre soumise à la lubrification, au pastillage et au frittage est préparée par les étapes successives suivantes :

- on réalise la sulfuration d'une poudre de UO$_2$ par le procédé tel qu'il a été décrit plus haut,
- on mélange éventuellement ladite poudre soufrée dans une matrice constituée d'une poudre d'UO$_2$, ou d'une poudre d'UO$_2$ et d'une poudre de PuO$_2$ ;

et, on soumet ladite charge, formée de ladite poudre soufrée ou dudit mélange, aux opérations de lubrification, de pastillage et de frittage.

Ce procédé de fabrication présente tous les avantages inhérents à la mise en oeuvre, lors du procédé de sulfuration de la poudre de UO$_2$, et conformément à l'invention, d'un agent de sulfuration gazeux.

En effet, du fait de l'utilisation d'un agent de sulfuration gazeux pour la sulfuration de la poudre de UO$_2$, on obtient ainsi une poudre soufrée dont le frittage, seule, ou incorporée dans une matrice de UO$_2$ ou de UO$_2$ et de PuO$_2$, conduit de manière surprenante dans les pastilles finales à une microstructure à gros grains.

Sans vouloir être liée par aucune théorie, l'invention utilise la présence temporaire de sulfure ou d'oxysulfure d'uranium dans la structure UO$_2$ ou MOX lors du frittage.

La sulfuration du dioxyde d'uranium conformément à l'invention conduit, suite au frittage, à des pastilles qui satisfont à toutes les exigences relatives à celles-ci.

En particulier, les pastilles préparées par le procédé selon l'invention avec sulfuration de la poudre d'UO$_2$ par voie gazeuse ont par exemple une microstructure généralement caractérisée par un gradient de taille entre le bord et le centre, et la présence de gros grains au coeur des pastilles, une densité de l'ordre de 97 à 98% de la densité théorique, et enfin une teneur en soufre résiduel extrêmement faible, généralement inférieure à 20 ppm, voire à 10 ppm.

En effet, grâce à l'incorporation du soufre par voie gazeuse, selon l'invention, la quantité d'espèces résultant de la sulfuration à éliminer lors du frittage se limite au dioxyde de soufre SO$_2$, contrairement au procédé d'incorporation par voie solide, qui introduit des espèces organiques.

Une telle élimination quasi-complète du soufre se répercute de manière bénéfique sur les propriétés finales des pastilles.

La poudre de UO$_2$ soufrée est de préférence incorporée dans la matrice de UO$_2$ ou de UO$_2$ et de PuO$_2$ par un simple brassage, de manière extrêmement facile et on obtient ainsi aisément une charge de poudre parfaitement homogène.

La teneur en soufre de la charge soumise aux opérations de lubrification, de pastillage et de frittage est généralement de 50 ppm à 1 %, de préférence de 100 ppm à 1 000 ppm (0,1 %).

De préférence, tout ou partie de la poudre de UO$_2$ ou du mélange de la poudre de UO$_2$ et de PuO$_2$ constituant la matrice a été préalablement à la lubrification soumise à une opération de broyage, de préférence dans un broyeur à boulets.

Tout ou partie de la poudre de UO$_2$ entrant dans la constitution de la charge peut être une poudre ayant subi préalablement au broyage un traitement de réduction, par exemple sous atmosphère d'argon hydrogéné, afin qu'elle présente un rapport atomique O/U de 2,0 à 2,04 par exemple de 2,04.

Un agent porogène peut être incorporé à la charge de poudres lors de la lubrification.

Le pastillage peut notamment être réalisé au moyen d'une presse hydraulique.

Avantageusement, le frittage est réalisé à une température, par exemple de 1 650 à 1 750°C, de préférence proche de 1 700°C en atmosphère hydrogénée, par exemple d'argon hydrogéné. De préférence, l'atmosphère de frittage est humidifiée.

On peut enfin soumettre les pastilles frittées à une rectification à sec.

D'autres caractéristiques et avantages de l'invention apparaîtront mieux à la lecture de la description qui suit, donnée à titre illustratif et non limitatif, en référence aux dessins annexés dans lesquelles :

- les figures 1 et 2 déjà décrites sont des diagrammes représentant les étapes de procédés classiques de fabrication de pastilles, selon l'art antérieur ;

- la figure 3 est un graphique montrant l'évolution de la concentration C en soufre (en ppm) en fonction de la température T de frittage exprimée en °C ;
- la figure 4 est une observation microstructurale, ou micrographie, d'une pastille frittée issue d'un mélange soufré à 270 ppm de S, constitué de $UO_2$ et de UOS. Le repère indiqué représente 200 $\mu$m;
- la figure 5 est une observation microstructurale, ou micrographie, d'une pastille frittée issue d'un mélange soufré à 270 ppm de S, constitué de $UO_2$ et de UOS. Le repère indiqué représente 50 $\mu$m ;
- la figure 6 est une observation microstructurale, ou micrographie d'une pastille frittée, issue d'une poudre de $UO_2$ sans soufre. Le repère indiqué représente 50 $\mu$m ;
- la figure 7 est une observation microstructurale, ou micrographie, d'une pastille frittée issue d'une poudre de $UO_2$ soufrée contenant 1 900 ppm de S. Le repère indiqué représente 50 $\mu$m ;
- la figure 8 est une observation microstructurale, ou micrographie, d'une pastille frittée issue d'un mélange soufré à 270 ppm de S, constitué de $UO_2$ et d'une poudre soufrée à 1900 ppm de S. Le repère indiqué représente 50 $\mu$m ;
- la figure 9 est une observation microstructurale, ou micrographie, d'une pastille frittée issue d'un mélange de $UO_2$ et de $PuO_2$ soufré à 270 ppm de S, constitué de $UO_2$, de $PuO_2$ et de UOS. Le repère indiqué représente 50 $\mu$m ;
- la figure 10 est une observation microstructurale, ou micrographie, d'une pastille frittée issue d'un mélange de $UO_2$ et de $PuO_2$ sans soufre. Le repère représente 50 $\mu$m.

Le procédé de sulfuration, selon l'invention, d'une poudre de $UO_2$ consiste à mettre en contact ladite poudre avec un agent de sulfuration gazeux.

La poudre de dioxyde d'uranium a généralement un rapport atomique (O/U) de 2,0, à 2,04.

Si la poudre de dioxyde d'uranium dont on dispose a une surstoechiométrie trop élevée, c'est-à-dire qu'elle a un rapport O/U supérieur, par exemple de 2,04 à 2,25, on la soumet à un traitement de réduction généralement sous atmosphère d'argon hydrogéné, à une température par exemple de 600°C à 1 000°C pouvant ramener le rapport atomique O/U dans la plage adéquate définie plus haut.

L'agent de sulfuration est conformément à l'invention un agent de sulfuration gazeux dans les conditions du traitement.

L'agent de sulfuration sera généralement choisi parmi le sulfure de carbone $CS_2$ et le sulfure d'hydrogène $H_2S$.

L'agent de sulfuration préféré est le sulfure d'hydrogène $H_2S$ car $H_2S$ est gazeux à la température ambiante, à la différence de $CS_2$ qui est liquide.

De préférence, pour réaliser le traitement, l'agent de sulfuration est mélangé avec de l'hydrogène et/ou un gaz neutre tel que de l'argon ou de l'azote.

La proportion en volume de l'agent de sulfuration est généralement de 1 % à 100 % en volume du mélange gazeux.

Dans le cas d'un mélange gazeux composé d'hydrogène, d'un gaz neutre tel que l'argon, et de $H_2S$ en tant qu'agent de sulfuration, la composition en volume du mélange sera généralement de 2,5 à 25% de $H_2S$, de 37,5% à 72,5 % de $H_2$ et de 60% à 2,5 % d'argon.

L'opération de sulfuration est par exemple réalisée dans un réacteur tubulaire en quartz chauffé au moyen d'un enroulement résistif régulé en intensité, où est disposée la poudre à soufrer.

Le réacteur est muni de moyens de régulation permettant de faire circuler un débit gazeux total de 1 à 500 ml/minute par exemple de 200 ml/min, ainsi que de modifier éventuellement les proportions de chacun des gaz dans le mélange.

La sulfuration est généralement réalisée à une température de 800 à 1 200°C. De préférence, la température est de 970°C à 980°C. Il a été constaté que sur le plan cinétique, il- était particulièrement intéressant de se placer dans un tel intervalle de température mais des températures plus basses conviendraient également, par exemple de 800°C à 950°C.

La durée du traitement est généralement de 1 à 11 heures par exemple de 2h30.

Le traitement de sulfuration conduit à l'obtention d'une poudre contenant du soufre à des teneurs variables et qui dépendent des conditions thermodynamiques et cinétiques de la sulfuration. La quantité de soufre peut, selon l'invention, être facilement ajustée, lors du traitement, réalisé de préférence sous un gaz vecteur contrôlé en agissant sur les divers paramètres régissant la sulfuration tels que la température, le débit et la composition du gaz de balayage et la durée de traitement.

La concentration ou teneur en soufre dans la poudre finale soufrée est variable mais est généralement dé 100 ppm à 12 % de soufre.

Le soufre est présent dans la structure de l'$UO_2$ ou en adsorption, mais il peut apparaître sous la forme de phases cristallines telles que UOS, US ou $US_2$.

La proportion et la nature des phases étant liées à la teneur en soufre, lors de la sulfuration, on cherchera à éviter la formation de US et $US_2$, en visant des concentrations en soufre faibles, mais suffisantes, pour obtenir l'effet désiré, par ajustement des paramètres de sulfuration visés plus haut.

L'invention concerne en outre un procédé de fabrication de pastilles de combustible nucléaire à base d'oxyde d'uranium ou d'oxyde mixte d'uranium et de plutonium (MOX) à partir d'une poudre de $UO_2$ ou d'une poudre de $UO_2$ et de $PuO_2$ totalement ou partiellement soufrée, par une suite d'étapes comprenant essentiellement un pastillage et un frittage.

Ce procédé de préparation de pastilles de combustibles nucléaires se caractérise par le fait que tout ou partie de ladite poudre de $UO_2$ entrant dans le processus de fabrication des pastilles est préalablement soufrée par le procédé de sulfuration tel qu'il a été décrit en détails ci-dessus.

Par les termes « tout ou partie de la poudre de $UO_2$ est préalablement soufrée », on entend que la poudre soufrée peut soit être pastillée et frittée seule, c'est-à-dire constituer la totalité de la charge de poudre soumise au pastillage puis au frittage, soit être introduite dans une matrice d'$UO_2$, ou d'un mélange d'$UO_2$ et de $PuO_2$.

Il est à noter que la poudre de dioxyde d'uranium, entrant dans la composition de la matrice est, dans la présente description, généralement définie par la formule $UO_2$ par soucis de simplification, indépendamment d'un écart éventuel à la stoechiométrie.

Toutefois, cette poudre de dioxyde d'uranium présente généralement une surstoechiométrie et a donc en fait la formule $UO_{2+x}$, avec x = 0 à 0,25.

On verra plus loin, que de préférence, la surstoechiométrie du dioxyde d'uranium doit être faible par exemple avec x de 0 à 0,04, et que, le cas échéant on soumet la poudre de $UO_2$ brute à un traitement de réduction pour amener la surstoechiométrie dans cette plage.

L'incorporation dans une telle matrice se fait à l'état solide, de préférence par simple brassage généralement dans un mélangeur doux, par exemple de type mélangeur à mouvement oscillo-rotatif à une vitesse de rotation généralement de 15 à 90 tr/min, et pendant une durée de 15 à 60 minutes.

Tout autre type de mélangeur peut être utilisé, notamment un mélangeur conique à vis ou un mélangeur à socs.

Cette étape de mélange consiste en fait en un simple brassage mécanique qui s'avère suffisant pour obtenir après pastillage et frittage des pastilles de combustible répondant aux spécifications exigées et présentant toutes les propriétés caractéristiques améliorées des pastilles de l'invention. La sulfuration de tout ou partie de la poudre de $UO_2$ améliore, notamment dans le cas de la préparation des pastilles d'oxyde mixte, l'homogénéité de la répartition du plutonium au sein du mélange.

La sulfuration conservant la morphologie des granulés d'$UO_2$, la totalité de la charge destinée au pastillage reste coulable, facilitant le remplissage des matrices lors de l'étape ultérieure de pressage.

Le pourcentage massique de poudre de $UO_2$ soufrée par rapport à l'ensemble du mélange des poudres dépend de la nature de la poudre soufrée qui peut être constituée de UOS et/ou de US et/ou de $US_2$.

Ainsi, dans le cas d'une poudre de $UO_2$ soufrée, constituée essentiellement d'une monophase de UOS, la teneur en poudre soufrée sera généralement de 0,1 à 10 % massique.

Dans tous les cas, le mélange est réalisé de telle sorte que la teneur massique globale en soufre élémentaire soit généralement de 270 ppm à 1%, dans la charge finale (avec une matrice de $UO_2$ ou $UO_2 + PuO_2$).

Cependant, il est également possible de viser des teneurs plus basses par exemple de 100 ppm à 270 ppm.

Dans le cas d'une matrice constituée uniquement de poudre de dioxyde d'uranium $UO_2$, on utilise pour la matrice une poudre de $UO_2$ qui est analogue à celle qu'on a utilisée ci-dessus en tant que produit de départ pour la sulfuration.

La poudre d'uranium incorporée dans la matrice a généralement un rapport atomique (O/U) de 2,0 à 2,04.

Si la poudre de dioxyde d'uranium dont on dispose a une stoechiométrie trop élevée, c'est-à-dire avec un rapport O/U supérieur, par exemple de 2,04 à 2,25, on peut la soumettre à un traitement de réduction pour conserver le rapport atomique O/U dans la plage adéquate définie ci-dessus.

Tout ou partie de la matrice de $UO_2$ peut également être avantageusement constituée d'une poudre de $UO_2$ broyée, préalablement à l'incorporation de la poudre de dioxyde d'uranium soufré.

On utilise alors de préférence comme poudre de départ une poudre de $UO_2$ ayant un rapport O/U élevé, par exemple de 2,04 à 2,25 et on la soumet à une étape de broyage pour obtenir une poudre plus fine et conserver le rapport O/U de 2,04 à 2,25.

Cette opération de broyage connue de l'homme du métier est généralement réalisée dans un broyeur à boulets en matériau dur ou tout autre type de broyeur, par exemple un broyeur à billes (broyage par attrition) ou un broyeur à jet de gaz.

Dans le cas d'une matrice constituée d'un mélange de poudres d'$UO_2$ et de $PuO_2$ tout ou partie de la poudre de dioxyde d'uranium peut être une poudre ayant à l'origine une surstoechiométrie trop élevée et ayant subi un traitement de réduction pour ramener le rapport atomique O/U dans la plage adéquate définie ci-dessus.

En outre, tout ou partie du mélange de la poudre de $UO_2$ et de $PuO_2$ formant la matrice peut avoir subi au préalable et de manière avantageuse, un broyage dans les conditions déjà décrites ci-dessus pour une matrice constituée uniquement d'$UO_2$.

Par exemple, une partie de la poudre de $UO_2$ mélangée avec la poudre de $UO_2$ sulfurée pourra être une poudre de $UO_2$ réduite, dans les conditions mentionnées ci-dessus, tandis que la matrice pourra être constituée d'un mélange de poudres de $UO_2$ et de $PuO_2$ ayant été soumis à un broyage.

Les poudres de $PuO_2$ peuvent le cas échéant être calcinées avant d'être introduites dans le mélange.

Les poudres de $UO_2$ soufrées et non soufrées d'une part et la poudre de $PuO_2$ doivent être dosées très précisément afin d'obtenir dans le mélange soumis au pastillage la teneur exacte en plutonium, spécifiée, dans les pastilles finales en oxyde mixte. Cette teneur en plutonium est généralement de 2 à 15 % en masse.

La matrice de $UO_2 + PuO_2$ peut être préparée, par exemple, comme dans le document FR-A-2 738 076, en particulier comme dans les étapes a) à e) de la revendication 1 ou a) et b) de la revendication 2.

Les étapes suivantes de lubrification avec addition éventuelle d'un agent porogène, mise en forme par pressage ou pastillage, frittage, et éventuellement rectification sont réalisées de manière connue comme par exemple dans les brevets antérieurs visés plus haut.

L'étape de lubrification peut être réalisée en utilisant par exemple comme lubrifiant du stéarate de zinc ou de calcium.

Dans le cas où la densité des pastilles frittées obtenues à partir de cette charge de poudres est trop élevée par rapport aux spécifications requises, on ajoute à la poudre un agent porogène, par exemple de l'azodicarbonamide, en même temps que le lubrifiant.

L'étape de pastillage ou de mise en forme par pressage peut être effectuée par exemple en utilisant une presse hydraulique.

A ce stade, préalable au frittage, la densité de la pastille est généralement de 50 à 60 % de la densité théorique qui est de 10,96 à 11,46.

L'étape de frittage est réalisée dans les meilleurs délais après le pastillage, de façon à limiter les effets de la radiolyse du lubrifiant et éventuellement de l'agent porogène sur les pastilles crues.

Le frittage est généralement réalisé comme dans l'art antérieur, à une température généralement de 1650 à 1750°C, de préférence proche de 1 700°C, en atmosphère de gaz réducteur, par exemple dans un mélange hydrogène-argon.

De préférence, l'atmosphère de frittage est humidifiée.

L'invention met à profit la présence temporaire de sulfure ou d'oxysulfure d'uranium dans la structure $UO_2$ ou MOX, pendant le frittage. La dégradation du soufre, par l'humidité locale ou par celle de l'atmosphère de frittage dès les basses températures, passe par la formation d'oxyde de soufre gazeux qui s'élimine aisément, et simultanément par la formation de $UO_2$.

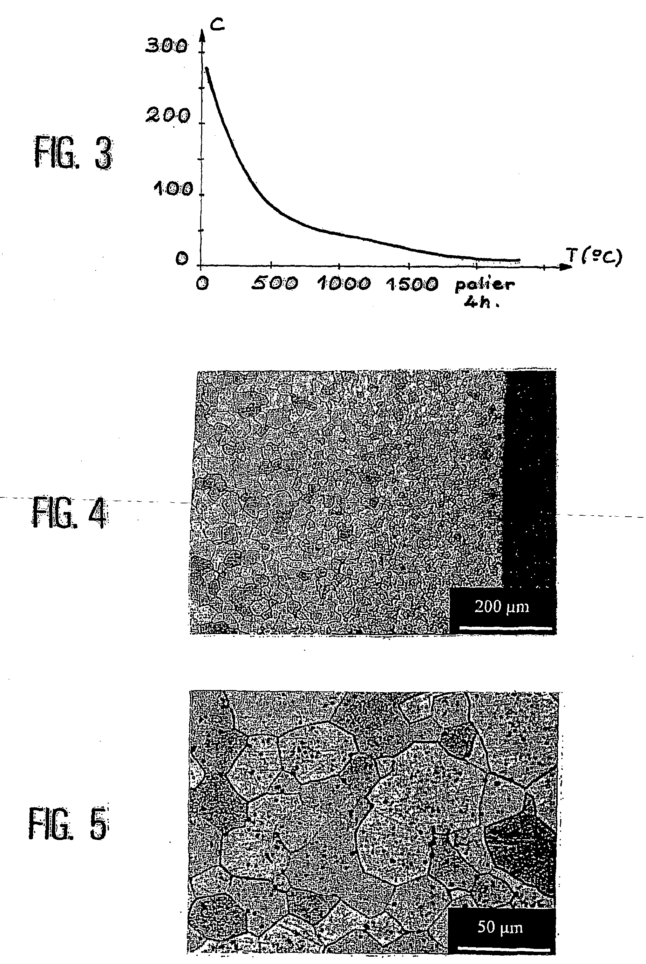

On note sur la figure 3 que la concentration en soufre (ppm) diminue avec la température de frittage.

Elle passe de 270 ppm dans la poudre initiale de frittage (« 0°C ») à environ 10 ppm à 1 700 °C après un palier de 4 heures.

Après frittage, on peut soumettre les pastilles à une rectification qui peut être effectuée sur une rectifieuse sans centre et à sec, afin d'obtenir des pastilles satisfaisant à la spécification sur le diamètre.

Les pastilles obtenues par le procédé selon l'invention présentent généralement les caractéristiques suivantes :

• une densité de l'ordre de 97 à 98% de la densité théorique,

• un gradient de taille de grains entre la zone périphérique d'environ 50 à 300 $\mu$m d'épaisseur, et le coeur de la pastille frittée (figure 4). La taille des grains est mesurée sur des micrographies obtenues par microscopie optique des pastilles préalablement tronçonnées, polies et ayant subi une attaque chimique. Ce type de microstructure est favorable à la diminution des interactions mécaniques entre les pastilles et les gaines dans lesquelles les pastilles seront ensuite introduites. Au bord des pastilles, les grains ont une taille moyenne proche de 10 microns. La zone principale est à gros grains,

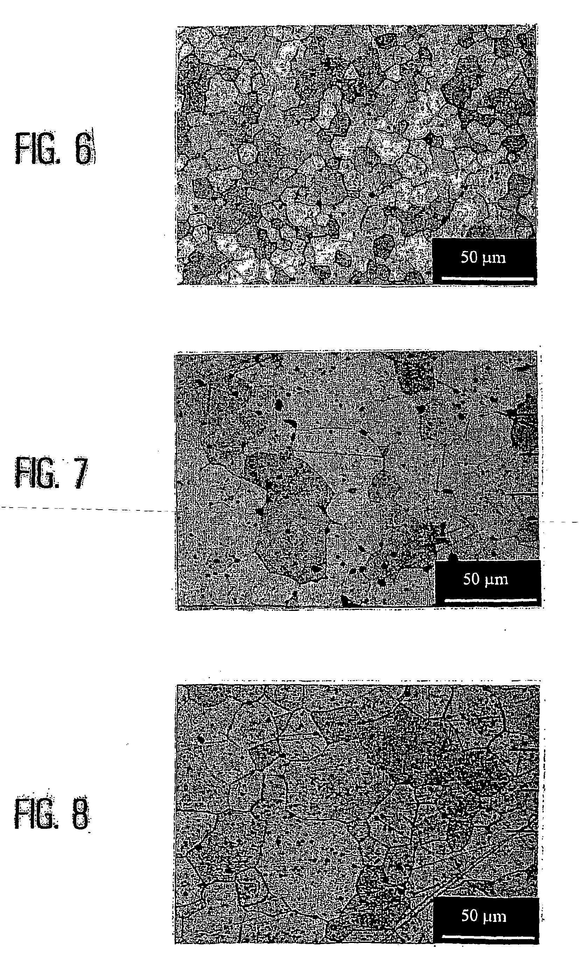

• une taille de grains élevée, au coeur des pastilles, et dont la valeur moyenne atteint 25 à 30 $\mu$m (figure 5) contre 8 à 10 $\mu$m pour un combustible sans soufre (figure 6). Certains grains peuvent mesurer plusieurs dizaines de microns (80 $\mu$m) voire centaines de microns (jusqu'à 600 $\mu$m),

• une bonne homogénéité de répartition en taille des grains,

• une teneur résiduelle en soufre de 10 ppm massique, à 20 ppm pour les pastilles à plus forte teneur initiale en soufre. La majorité du soufre n'est plus dans la structure avant le début de la fermeture de la porosité du combustible, soit vers 1100°C (figure 4),

• L'apport d'eau, soit par l'atmosphère de frittage, soit par la réduction de la surstoechiométrie des matrices, en particulier de $UO_{2+x}$, permet d'oxyder le soufre présent en $SO_2$.

Les exemples suivants, donnés à titre illustratif et non limitatif illustrent le procédé de sulfuration ainsi que le procédé de fabrication de pastilles de combustible nucléaire selon l'invention. Les exemples comparatifs illustrent la préparation de pastilles à partir de poudres n'ayant pas subi le traitement de sulfuration par voie gazeuse selon l'invention.

Exemple 1

a) Traitement de sulfuration

Dans un premier temps, on soumet une poudre de dioxyde d'uranium à un traitement thermique à 970°C pendant 2 h 30 sous flux gazeux de composition volumique 5 % $H_2S$ - 35 % $H_2$ - 60 % Ar.

A l'issue de ce traitement, la poudre est constituée d'une phase $UO_2$ et de traces d'une phase UOS. Le dosage chimique du soufre élémentaire dans cette poudre indique une teneur globale moyenne de 1 900 ppm classique de soufre (équivalent à 1,7% massique de UOS dans la poudre).

b) Préparation des pastilles

La poudre est ensuite mise en forme en utilisant une presse hydraulique sous une pression de 300 MPa. Pendant cette étape, la matrice est lubrifiée à l'aide de stéarate de zinc. Les comprimés ou pastilles crues ont une géométrie cylindrique caractérisée par une hauteur et un diamètre proches de 6 mm.

Les pastilles obtenues sont soumises à un frittage à 1 700°C sous atmosphère d'argon hydrogéné à 5 % et humidifié à 1 000 ppm d'eau.

Les pastilles frittées se caractérisent par :

- un gradient de tailles de grains entre le bord et le centre des pastilles ;
- une taille moyenne de grains au coeur des pastilles de 25 $\mu$m et en périphérie de 10 $\mu$m. Cette microstructure est présentée sur la figure 7. La taille des gros grains peut atteindre 60 $\mu$m ;
- une teneur en soufre résiduelle comprise entre 10 et 20 ppm massique.

Exemple 1A (comparatif)

On prépare des pastilles de la même manière que dans l'exemple 1, mais à partir d'une poudre de dioxyde d'uranium n'ayant pas subi de traitement de sulfuration.

Les pastilles de poudre ainsi préparées n'ayant pas subi de traitement de sulfuration gazeuse présentent une taille moyenne de grains nettement inférieure, de 11 $\mu$m, comme l'illustre la figure 6.

Exemple 2

a) Traitement de sulfuration

On soumet une poudre de dioxyde d'uranium à un traitement thermique à 980°C pendant 11 heures sous flux gazeux de composition volumique 25 % $H_2S$ - 72,5 % $H_2$ - 2,5 % Ar. A l'issue de ce traitement, la poudre est constituée d'une monophase UOS. La teneur théorique en soufre élémentaire est de 11,2 %.

b) Préparation de la poudre à pastiller

On soumet 402 g d'une poudre de dioxyde d'uranium, présentant un rapport atomique O/U de 2,18, à un broyage en jarre à boulets, pendant une durée de 3 h.

A l'issue de ce broyage, la poudre d'$UO_{2+x}$ est brassée avec 0,24 % massique de UOS obtenu précédemment, dans un mélangeur de type Turbula® , à 62 tr/min. pendant 45 min. La teneur globale en soufre élémentaire de ce mélange est de 270 ppm massique.

c) Préparation des pastilles

Le mélange est mis en forme en utilisant une presse hydraulique sous une pression de 300 MPa. Pendant cette étape, la matrice est lubrifiée à l'aide de stéarate de zinc. Les comprimés crus ont une géométrie cylindrique caractérisée par une hauteur et un diamètre proches de 6 mm.

Les pastilles obtenues sont soumises à un frittage à 1 700°C sous atmosphère d'argon hydrogéné à 5 % et humidifié à 1 000 ppm d'eau.

Les pastilles frittées se caractérisent par :

- une taille moyenne de grains au coeur des pastilles de 27 $\mu$m et en périphérie de 10 $\mu$m. La taille des gros grains peut atteindre 80 $\mu$m. Cette microstructure est présentée sur la figure 5 ;
- une teneur en soufre résiduelle de 10 ppm.

Exemple 3

a) Préparation de la poudre à pastiller

On soumet une poudre de dioxyde d'uranium, présentant un rapport atomique O/U de 2,18 à un traitement de réduction sous atmosphère d'argon hydrogéné, ramenant le rapport atomique O/U final à 2,04.

A l'issue de ce traitement, la poudre d'$UO_{2,04}$ est brassée avec la poudre issue du traitement de sulfuration de l'exemple 1, de teneur en soufre élémentaire de 1 900 ppm massique, de telle sorte que le mélange final soit à une teneur en soufre élémentaire de 270 ppm massique. L'étape de brassage a lieu dans un mélangeur de type Turbula® , à 62 tr/min. pendant 45 min.. La charge est constituée de 85,8 % massique de la poudre de dioxyde d'uranium et de 14,2 % massique de la poudre sulfurée.

b) Préparation des pastilles

Le mélange est mis en forme en utilisant une presse hydraulique sous une pression de 300 MPa. Pendant cette étape, la matrice est lubrifiée à l'aide de stéarate de zinc. Les comprimés crus ont une géométrie cylindrique caractérisée par une hauteur et un diamètre proches de 6 mm.

Les pastilles obtenues sont soumises à un frittage à 1 700°C sous atmosphère d'argon hydrogéné à 5 % et humidifié à 1 000 ppm d'eau.

Les pastilles frittées se caractérisent par une taille moyenne de grains au coeur des pastilles de 27 $\mu$m (figure 8) et en périphérie de 10 $\mu$m. La taille des gros grains peut atteindre 80 $\mu$m.

Outre une microstructure présentant un gradient de taille entre le bord et le centre, outre la présence de gros grains à coeur des pastilles, le procédé permet également d'obtenir des pastilles de densités de l'ordre de 97 % - 98 % de la densité théorique (10,96).

Cette dernière remarque s'applique aussi aux exemples 1 et 2.

Exemple 4 - Illustration avec $PuO_2$

a) Préparation de la poudre à pastiller

On soumet 367 g d'un mélange constitué de 327 g d'une poudre de dioxyde d'uranium ($\frac{O}{U}$ de 2,18) et de 40 g d'une poudre de dioxyde de plutonium, à un broyage en jarre à boulets, pendant une durée de 2 heures.

A l'issue de ce broyage, le mélange des deux oxydes d'uranium et de plutonium, est tamisé à travers un tamis d'ouverture ≤ 250 μm, puis brassé avec la poudre issue du traitement de sulfuration de l'exemple 2, de teneur en soufre élémentaire de 11,2 % massique, de telle sorte que le mélange final soit à une teneur en soufre élémentaire de 270 ppm massique. L'étape de brassage a lieu dans un mélangeur à mouvement rotatif simple à 60 tr/min. pendant 60 minutes. La charge est constituée de 99,76 % massique du mélange des deux oxydes d'uranium et de plutonium et de 0,24 % massique de UOS obtenu selon l'exemple 2.

b) Préparation des pastilles

Le mélange est mis en forme en utilisant une presse hydraulique sous une pression de 300 MPa. Pendant cette étape, la matrice est lubrifiée à l'aide de stéarate de zinc. Les comprimés crus ont une géométrie cylindrique caractérisée par une hauteur et un diamètre proches de 6 mm.

Les pastilles obtenues sont soumises à un frittage de 1 700°C sous atmosphère d'argon hydrogéné à 5 % et humidifié à 1 000 ppm d'eau.

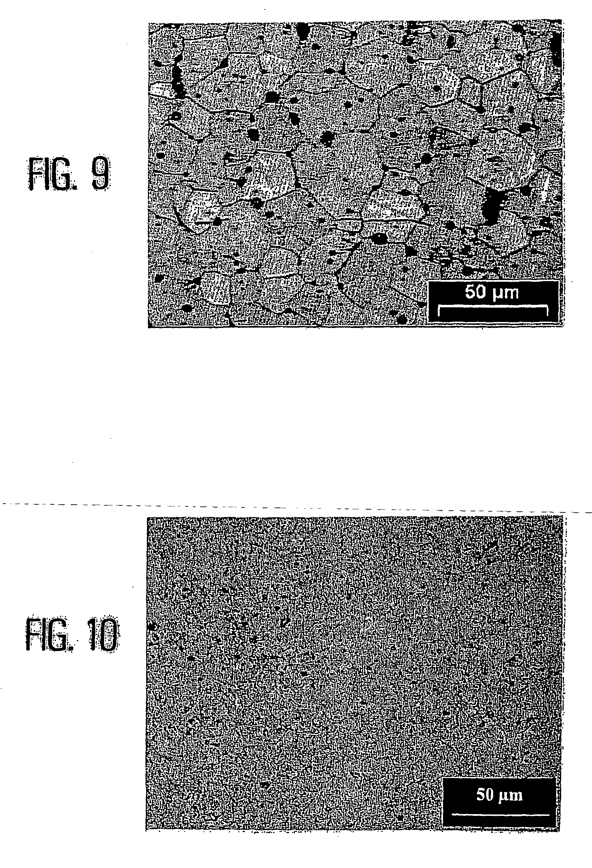

Les pastilles frittées se caractérisent par une taille moyenne de grains au coeur des pastilles de 20 μm (figure 9) et en périphérie d'environ 5 μm. La taille des gros grains peut atteindre 60 μm.

Exemple 4A (comparatif)

Par comparaison, des pastilles du mélange (UO$_2$+PuO$_2$) n'ayant pas été soumis au brassage avec UOS, conduisent à la microstructure présentée en figure 10. La taille moyenne des grains est mesurée à 6 μm.

Les pastilles frittées ont une densité de l'ordre de 96 % de la densité théorique (11,01).

**Revendications**

1. Procédé de sulfuration d'une poudre d'UO$_2$, dans lequel ladite poudre est sulfurée par mise en contact avec un agent de sulfuration gazeux.

2. Procédé selon la revendication 1, dans lequel l'agent de sulfuration gazeux est choisi parmi le sulfure d'hydrogène H$_2$S et le sulfure de carbone CS$_2$, de préférence l'agent de sulfuration gazeux est H$_2$S.

3. Procédé selon l'une des revendications 1 et 2, dans lequel l'agent de sulfuration gazeux est mélangé avec de l'hydrogène et/ou un gaz neutre, tel que l'argon ou l'azote.

4. Procédé selon la revendication 3, dans lequel le mélange gazeux comprend en volume de 2,5 à 25% d'agent de sulfuration, tel que H$_2$S, de 37,5% à 72,5% d'hydrogène, et de 60% à 2,5% de gaz neutre.

5. Procédé selon l'une quelconque des revendications 3 et 4, dans lequel le débit gazeux total est de 1 à 500 ml/min., par exemple proche de 200 ml/min.

6. Procédé selon l'une quelconque des revendications 1 à 5, dans lequel la mise en contact est réalisée à une température de 800 à 1 200°C, de préférence de 970 à 980°C pendant une durée de 1 à 11 heures.

7. Procédé de fabrication de pastilles de combustible nucléaire à base d'oxyde d'uranium, ou d'oxyde mixte d'uranium et de plutonium, à partir d'une charge totalement ou partiellement soufrée de poudre d'UO$_2$ ou de poudre d'UO$_2$ et de PuO$_2$, par lubrification, pastillage et frittage, dans lequel : la charge de poudre soumise à la lubrification, au pastillage et au frittage est préparée par les étapes successives suivantes :

    - on réalise la sulfuration d'une poudre de UO$_2$ par le procédé selon l'une quelconque des revendications 1 à 6,
    - on mélange éventuellement ladite poudre soufrée dans une matrice constituée d'une poudre d'UO$_2$, ou d'une poudre d'UO$_2$ et d'une poudre de PuO$_2$ ;

et, on soumet ladite charge, formée de ladite poudre soufrée ou dudit mélange, aux opérations de lubrification, de pastillage et de frittage.

8. Procédé selon la revendication 7, dans lequel la poudre soufrée est incorporée dans la matrice par un simple brassage.

9. Procédé selon la revendication 7 ou la revendication 8, dans lequel la teneur en soufre de la charge soumise aux opérations de lubrification, de pastillage et de frittage est de 50 ppm à 1 %, de préférence de 100 ppm à 1 000 ppm.

10. Procédé selon l'une quelconque des revendications 7 à 9, dans lequel tout ou partie de la matrice est préalablement, à la lubrification, soumise à une opération de broyage, de préférence dans un broyeur à boulets.

11. Procédé selon l'une quelconque des revendications 7 à 10, dans lequel tout ou partie de la poudre de UO$_2$ entrant dans la constitution de la charge, est une poudre ayant subi préalablement au broyage un traitement de réduction, par exemple sous atmosphère d'argon hydrogéné, afin qu'elle présente un rapport atomique O/U de 2,00 à 2,04.

**12.** Procédé selon l'une quelconque des revendications 7 à 11, dans lequel un agent porogène est incorporé à la charge de poudres lors de la lubrification.

**13.** Procédé selon l'une quelconque des revendications 7 à 12, dans lequel on réalise le pastillage au moyen d'une presse hydraulique.

**14.** Procédé selon l'une quelconque des revendications 7 à 13, dans lequel on réalise le frittage à une température de 1650 à 1750°C, par exemple de 1 700°C, en atmosphère hydrogénée.

**15.** Procédé selon la revendication 14, dans lequel l'atmosphère de frittage est humidifiée.

**16.** Procédé selon l'une quelconque des revendications 7 à 15, dans lequel on soumet les pastilles frittées à une rectification à sec.

**Claims**

**1.** Sulphidation method for a $UO_2$ powder, in which said powder is sulfurated by bringing it into contact with a gaseous sulphidation agent.

**2.** Method according to claim 1, in which the gaseous sulphidation agent is chosen from among hydrogen sulphide $H_2S$ and carbon sulphide $CS_2$, and preferably the gaseous sulphidation agent is $H_2S$.

**3.** Method according to one of claims 1 and 2, in which the gaseous sulphidation agent is mixed with hydrogen and/or an inert gas, such as argon or nitrogen.

**4.** Method according to claim 3, in which the gaseous mixture comprises, by volume, 2.5 to 25% of sulphidation agent, such as $H_2S$, from 37.5% to 72.5% of hydrogen, and from 60% to 2.5% of inert gas.

**5.** Method according any of claims 3 and 4, in which the total flow rate of gas is from 1 to 500 ml/min, for example close to 200 ml/min.

**6.** Method according to any of claims 1 to 5, in which the bringing into contact is carried out at a temperature from 800°C to 1200°C, and preferably from 970°C to 980°C for a period of time of 1 to 11 hours.

**7.** Method for manufacturing nuclear fuel pellets based on uranium oxide, or mixed oxide of uranium and plutonium, from a load of totally or partially sulfurated $UO_2$ powder or $UO_2$ powder and $PuO_2$ powder, by lubrication, pelletizing and sintering, in which: the load of powder subjected to said lubrication, pelletizing and sintering is prepared by the following successive steps:

- sulphidation of a $UO_2$ powder by the method according to any of claims 1 to 6;
- optionally mixing, said sulfurated powder in a matrix comprising a $UO_2$ powder, or of a $UO_2$ powder and a $PuO_2$ powder;
- and, subjecting said load, formed from said sulfurated powder or said mixture, to lubrication, pelletizing and sintering operations.

**8.** Method according to claim 7, in which the sulfurated powder is incorporated in the matrix by simple mixing.

**9.** Method according to claim 7 or claim 8, in which the level of sulphur in the load subjected to the lubrication, pelleting and sintering operations is from 50 ppm to 1%, and preferably from 100 ppm to 1000 ppm.

**10.** Method according to any of claims 7 to 9, in which all or part of the matrix is subjected, prior to lubrication, to a grinding operation, preferably in a ball mill.

**11.** Method according to any of claims 7 to 10, in which all or part of the $UO_2$ powder used in the constitution of the load is a powder that has been subjected, prior to grinding, to a reducing treatment, for example under a hydrogenated argon atmosphere, so that it has an O/U atomic ratio of 2.00 to 2.04.

**12.** Method according to any of claims 7 to 11, in which a pore forming agent is incorporated in the load of powders during lubrication.

**13.** Method according to any of claims 7 to 12, in which one carries out the pelletizing by means of a hydraulic press.

**14.** Method according to any of claims 7 to 13, in which one carries out the sintering at a temperature between 1650°C and 1750°C, for example at 1700°C, in a hydrogenated atmosphere.

**15.** Method according to claim 14, in which the sintering atmosphere is humidified.

**16.** Method according to any of claims 7 to 15, in which one subjects the sintered pellets to dry precision grinding.

**Patentansprüche**

**1.** Verfahren zur Sulfurierung eines $UO_2$-Pulvers, bei dem das genannte Pulver durch Inkontaktbringen mit einem gasförmigen Sulfurierungsmittel sulfuriert wird.

**2.** Verfahren nach Anspruch 1, bei dem das gasförmige Sulfurierungsmittel ausgewählt wird aus der Gruppe Schwefelwasserstoff $H_2S$ und Schwefelkohlenstoff $CS_2$, vorzugsweise $H_2S$ ist.

**3.** Verfahren nach einem der Ansprüche 1 und 2, bei dem das gasförmige Sulfurierungsmittel mit Wasserstoff und/oder einem inerten (neutralen) Gas wie Argon oder Stickstoff gemischt wird.

**4.** Verfahren nach Anspruch 3, bei dem die gasförmige Mischung umfasst 2,5 bis 25 Vol.-% Sulfurierungsmittel wie $H_2S$, 37,5 bis 72,5 Vol.-% Wasserstoff und 60 bis 2,5 Vol.-% des inerten (neutralen) Gases.

**5.** Verfahren nach einem der Ansprüche 3 und 4, bei dem die gesamte Gasdurchflussmenge 1 bis 500 ml/min beträgt, beispielsweise nahe bei 200 ml/min liegt.

**6.** Verfahren nach einem der Ansprüche 1 bis 5, bei dem das Inkontaktbringen bei einer Temperatur von 800 bis 1200 °C, vorzugsweise von 970 bis 980 °C, für eine Dauer von 1 bis 11 h durchgeführt wird.

**7.** Verfahren zur Herstellung von Kernbrennstoff-Pellets auf Basis von Uranoxid oder einer Uranoxid/Plutoniumoxid-Mischung aus einem Ausgangsmaterial, das vollständig oder teilweise schwefelhaltiges $UO_2$-Pulver oder $UO_2/PuO_2$-Pulver darstellt, durch Lubrifizieren, Pelletisieren und Sintern, wobei in dem Verfahren das lubrifizierte, pelletisierte und gesinterte Ausgangsmaterialpulver nach den folgenden aufeinanderfolgenden Stufen hergestellt wird:

- man führt die Sulfurierung eines $UO_2$-Pulvers unter Anwendung des Verfahrens nach einem der Ansprüche 1 bis 6 durch,
- man mischt gegebenenfalls das genannte schwefelhaltige Pulver ein in eine Matrix, bestehend aus einem $UO_2$-Pulver oder einer $UO_2/PuO_2$-Pulvermischung; und man unterwirft das genannte Ausgangsmaterial, das aus dem genannten schwefelhaltigen Pulver oder der genannten schwefelhaltigen Pulvermischung besteht, einer Lubrifizierung, Pelletisierung und Sinterung.

**8.** Verfahren nach Anspruch 7, bei dem das schwefelhaltige Pulver durch einfaches Einrühren in die Matrix eingearbeitet wird.

**9.** Verfahren nach Anspruch 7 oder 8, bei dem der Schwefelgehalt des Ausgangsmaterials, das einer Lubrifizierung, Pelletisierung und Sinterung unterworfen worden ist, 50 ppm bis 1 %, vorzugsweise 100 ppm bis 1 000 ppm, beträgt.

**10.** Verfahren nach einem der Ansprüche 7 bis 9, bei dem die gesamte Matrix oder ein Teil der Matrix vor der Lubrifizierung gemahlen wird, vorzugsweise in einer Kugelmühle gemahlen wird.

**11.** Verfahren nach einem der Ansprüche 7 bis 10, bei dem das gesamte $UO_2$-Pulver oder ein Teil desselben, das in dem Ausgangsmaterial vorliegt, ein Pulver darstellt, das vor dem Mahlen (Zerkleinern) reduziert worden ist, beispielsweise in einer mit Wasserstoff angereicherten Argonatmosphäre, sodass es ein O/U-Atomverhältnis von 2,00 bis 2,04 aufweist.

**12.** Verfahren nach einem der Ansprüche 7 bis 11, bei dem dem Pulver-Ausgangsmaterial bei der Lubrifizierung ein Porenbildner einverleibt wird.

**13.** Verfahren nach einem der Ansprüche 7 bis 12, bei dem die Pelletisierung mittels einer hydraulischen Presse durchgeführt wird.

**14.** Verfahren nach einem der Ansprüche 7 bis 13, bei dem die Sinterung bei einer Temperatur von 1650 bis 1750 °C, beispielsweise bei 1700 °C, in einer mit Wasserstoff angereicherten Atmosphäre durchgeführt wird.

**15.** Verfahren nach Anspruch 14, bei dem die Sinterungsatmosphäre angefeuchtet ist.

**16.** Verfahren nach einem der Ansprüche 7 bis 15, bei dem man die gesinterten Pellets einer Trocken-Rektifizierung unterwirft.

FIG. 1

FIG. 2

**FIG. 3**

**FIG. 4**

200 µm

**FIG. 5**

50 µm

FIG. 6

50 µm

FIG. 7

50 µm

FIG. 8

50 µm

FIG. 9

FIG. 10